(19) **Europäisches Patentamt**

**European Patent Office**

**Office européen des brevets**

(11) **EP 1 197 316 B1**

(12) **EUROPÄISCHE PATENTSCHRIFT**

(45) Veröffentlichungstag und Bekanntmachung des Hinweises auf die Patenterteilung:
**01.09.2004  Patentblatt 2004/36**

(51) Int Cl.⁷: **B29C 70/72**, B29C 37/00, B29C 45/14

(21) Anmeldenummer: **01129062.4**

(22) Anmeldetag: **15.03.2000**

(54) **Kunststoffbauelement mit Einlegeteilen**

Plastic component with inserts

Composant en matière plastique avec des inserts

(84) Benannte Vertragsstaaten:
**DE ES FR GB SE**
Benannte Erstreckungsstaaten:
**SI**

(30) Priorität: **31.03.1999  CH 61099**

(43) Veröffentlichungstag der Anmeldung:
**17.04.2002  Patentblatt 2002/16**

(60) Teilanmeldung:
**03022335.8 / 1 380 404**

(62) Dokumentnummer(n) der früheren Anmeldung(en) nach Art. 76 EPÜ:
**00810218.8 / 1 048 442**

(73) Patentinhaber: **Alcan Technology & Management AG**
**8212 Neuhausen am Rheinfall (CH)**

(72) Erfinder:
- **Reif, Georg**
  **5643 Sins (CH)**
- **Faisst, Dieter**
  **Kingston, Ontario K7M 1Z6 (CA)**
- **Niedermeier, Michael**
  **8212 Neuhausen am Rheinfall (CH)**

(56) Entgegenhaltungen:
**US-A- 4 483 904          US-A- 5 118 257**
**US-A- 5 691 391**

EP 1 197 316 B1

**Beschreibung**

Vorliegende Erfindung betrifft ein Kunststoffbauelement aus einem Kunststoffwerkstoff und einem Einlegeteil enthaltend einen mit dem Kunststoffbauelement verbundenen Verbundabschnitt. Die Erfindung betrifft weiters die Verwendung von erfindungsgemässen Kunststoffbauelementen.

Der günstigen Materialeigenschaften wie geringes Gewicht, Korrosionsbeständigkeit, der beinahe uneingeschränkten Formgebungsmöglichkeiten und der hohen Festigkeit wegen, werden verstärkte Kunststoffe immer häufiger im Fahrzeug- und Flugzeugbau und im Bauwesen verwendet. So werden verstärkte Kunststoffe beispielsweise im Fahrzeugbau für Karosserieteile wie Kofferraumdeckel, Motorhauben oder Heck-Spoiler eingesetzt, wobei insbesondere glasfaserverstärkte Kunststoffe (GFK) und kohlenstofffaserverstärkte Kunststoffe (CFK) sowie aramidfaserverstärkte Kunststoffe verbreitet Anwendung finden. Seit man den Einsatz von schwer brennbaren Kunststoffen kennt, werden verstärkte Kunststoffe auch in Bereichen eingesetzt, in welchen dies aus Gründen der Brandsicherheit bisher nicht möglich war.

Die Montage oder das Fügen von solchen Kunststoffbauelementen mit Metallbauteilen oder auch mit anderen Kunststoffbauteilen, d.h. die Verbindungsverfahren, stellen jedoch höchste Anforderungen an den Konstrukteur. Insbesondere kontinuierlich faserverstärkte Kunststoffbauelemente können nicht ohne weiteres direkt mit mechanischen Befestigungsmitteln wie beispielsweise Nieten oder Schrauben mit anderen Bauteilen verbunden werden, da Unterschiede in der Festigkeit, der Steifigkeit und der Elastizität zwischen den einzelnen Werkstoffen an dessen Verbindungsflächen zu lokalen Schwachstellen führt.

Für Verbindungen zwischen Metall- und verstärkten Kunststoffbauelementen werden oft auch Klebeverbindungen angewendet. Diese erfordern jedoch sehr reine Klebeflächen und bedingen deshalb oft eine vorgängige spezielle Oberflächenbehandlung. Sie erfordern ein aufwendiges und zeitraubendes Arbeiten unter höchsten Reinheitsbedingungen. Klebeverbindungen zeigen häufig eine nur beschränkte Festigkeit oder bedingen recht grosse Klebeflächen, was wiederum zu Einschränkungen der Konstruktionsmöglichkeiten führt.

Weiters ist bekannt, Einlegeteile aus Metall, wie beispielsweise Gewindebuchsen, in die Kunststoffbauelemente zu integrieren. Diese dienen als Verbindungsschnittstelle für Schraubverbindungen mit anderen Bauelementen beispielsweise mit Metallstrukturen. Bei den genannten Einlegeteilen handelt es sich jedoch um verhältnismässig kleine Teile welche ganz lokal in den Kunststoffwerkstoff miteingebaut werden. Diese Einlegeteile weisen häufig eine komplexe Oberflächenstruktur auf, um eine zufriedenstellende Festigkeit der Metall-Kunststoff-Verbindung zu erreichen. Die Anwendung solcher Einlegeteile ist teuer und beschränkt sich auf Kunststoffgussteile, insbesondere auf Spritzgussteile, welche keine faserverstärkten Kunststoffe sind oder höchstens Kurzfasern enthalten. Diese Anwendung ist für den Karosseriebau nicht besonders geeignet.

DE 37 21 577 C2 beschreibt ein Verfahren zur Herstellung von Kunststoffmuffen mit Metalleinsatz, der einen zylindrischen und aussen mit einer zahnartigen Riffelung versehenen Abschnitt aufweist, wobei zunächst die Kunststoffmuffe hergestellt wird und nachfolgend der Metalleinsatz in eine Aufnahmeöffnung der Kunststoffmuffe eingebracht wird und die Riffelung bzw. Zahnung am Metalleinsatz unter Anwendung von Druck in die Innenwandung der Aufnahmeöffnung eingedrückt wird und der Kunststoff neben der Anwendung von Druck zusätzlich noch erwärmt wird. Dieses Verfahren eignet sich jedoch nicht für faserverstärkte Kunststoffe, insbesondere für solche mit hohem Fasergehalt. Verfahren, in welchen der Metalleinsatz direkt bei der Herstellung des Kunststoffteils einlaminiert wird sind gemäss DE 37 21 577 C2 unbefriedigend, da die grosse Verschiedenheit der beiden Werkstoffe zu Diskontinuitäten und Leckbildung im Verbundkörper führt.

EP 0 872 650 A1 beschreibt ebenfalls einen Metalleinsatz, welcher unter Erwärmung des Kunststoffteiles in eine Aufnahmeöffnung desselben eingeführt wird. Auch dieses Verfahren eignet sich nicht für faserverstärkte Kunststoffe und ergibt nicht die gewünschte Festigkeit für höchste Beanspruchung.

DE 41 17 167 C2 beschreibt einen Metalleinsatz, welcher in der Form eines Metallträgers ausgebildet ist und vollständig in das Kunststoffteil einlaminiert ist. Sogenannte Rundmaterialabschnitte am Metallträger werden mit Gewindebohrungen versehen und bilden sogenannte Gewindeeinsätze für Schraubverbindungen. Die Herstellung solcher Verbundkörper ist ebenfalls sehr aufwendig, da der Kunststoff aus einem Grund- und Überlaminat aufgebaut wird. Im weiteren erlauben die Rundmaterialabschnitte im wesentlichen lediglich die Verwendung von Schraubverbindungen.

Die US-A-4,483,904 beschreibt einen aus mehreren Teilen gefügten faserverstärkten Körper aus Kunststoff gemäß dem einleitenden Teil des Anspruchs 1. Ein erstes Teil ist ein mittels Pultrusion hergestelltes stabförmiges, faserverstärktes Kunststoffteil, an welchem einends die Verstärkungsfasern mechanisch aus dem Matrix-Verbund gelöst sind. Das stabförmige Kunststoffteil ist mit seinem die gelösten Fasern aufweisenden Ende in eine korrespondierende Öffnung eines zweiten faserverstärkten Kunststoffteils eingeführt, und mittels einer die losen Fasern bindenden Kunststoffmatrix im zweiten Kunststoffteil befestigt.

In allen vorgenannten Beispielen ist im weiteren das Problem des Steifigkeitssprunges und der unterschiedlichen Wärmedehnzahlen zwischen den beiden Werkstoffen Metall und Kunststoff unbefriedigend gelöst.

Einlegeteile aus Metall in Kunststoffwerkstoffen sind bekanntlich mit dem Problem behaftet, dass die beiden Werkstoffe Kunststoff und Metall sehr unterschiedliche Elastizitäten bzw. Steifigkeiten aufweisen, wodurch an den Verbindungsflächen Schwächezonen entstehen. Der Wert des Elastizitätsmoduls, nachfolgend E-Modul genannt, kann zum Beispiel bei mit Kohlenstofffasern verstärkten Kunststoffen (CFK) um rund das Vierfache höher liegen als bei Metallwerkstoffen wie beispielsweise Aluminium. Da die Steifigkeit eines Materials aus dem Produkt von E-Modul und Flächenträgheitsmoment berechnet wird, kommt es an den Verbindungsflächen der beiden Werkstoffe zu einem markanten Steifigkeitssprung.

Weiters erlaubte es das hohe Flächenträgheitsmoment von ebenen, flächigen oder bandförmigen Einlegeteilen, beispielsweise aus Metall, wegen des zu hohen Steifigkeitssprunges an den Verbindungsflächen zum Kunststoffwerkstoff bisher nicht, grössere und flächige Einlegeteile als Verbindungselemente, beispielsweise ein Metallband bzw. Metallblech, kraftübertragend in ein Kunststoffbauelement einzubetten.

Im weiteren weisen Metallwerkstoffe und Kunststoffe in der Regel ein unterschiedliches Wärmeausdehnungsverhalten auf, d. h. sie haben jeweils unterschiedliche Wärmedehnzahlen (kubische und lineare Wärmeausdehnungszahlen). Dies führt bei Temperaturänderungen zu Spannungen, die so hoch sein können, dass es an den Verbindungsflächen der beiden Werkstoffe zu Ablösungserscheinungen kommt.

Aus oben genannten Gründen entstehen an den Verbindungsflächen zwischen Kunststoffwerkstoff und Einlegeteil Schwachstellen, welche die Belastungsgrenzen einer Baugruppenstruktur bzw. eines Kunststoffbauelementes erheblich herabsetzen.

Die Werkstätten sind deshalb im allgemeinen nicht ausgerüstet, Verbindungen von hoher Qualität und Festigkeit zwischen verstärkten Kunststoffwerkstoffen und Metalleinlegeteilen herzustellen, weswegen es von grosser Bedeutung, ist Kunststoffbauelemente zu fertigen, die bereits über die notwendigen Verbindungsschnittstellen in Form von Einlegeteilen zum Befestigen von Metallstrukturen oder anderen Strukturen mit beispielsweise mechanischen Befestigungsmitteln aufweisen.

Vorliegender Erfindung liegt deshalb die Aufgabe zugrunde, kostengünstige Bauelemente oder Bauteile aus Kunststoff, insbesondere aus verstärktem Kunststoff, mit Verbindungsschnittstellen in Form von Einlegeteilen, insbesondere flächigen Einlegeteilen, vorzugsweise aus Metall, zu schaffen, bei welchen die Verbindung zwischen dem Kunststoffwerkstoff des Kunststoffbauelementes und den Einlegeteilen trotz der unterschiedlichen Elastizität bzw.

Steifigkeit und der unterschiedlichen Wärmeausdehnung der beiden Werkstoffe eine hohe mechanische Festigkeit, Belastbarkeit und Dauerhaftigkeit aufweist.

Erfindungsgemäss wird die Aufgabe dadurch gelöst, dass das Einlegeteil eine oder eine Mehrzahl von Ausnehmungen enthält, durch welche Verstärkungsfasern, Faserstränge und/oder textile Flächengebilde verschlauft sind, welche mit ihren freien Enden krafteinleitend in die Kunststoffmatrix des Kunststoffbauteils einlaminiert und mit dieser innig verbunden sind und das Einlegeteil im Kunststoffwerkstoff verankern. Der Verbundabschnitt des Einlegeteils kann zudem kammartige, parallel liegende oder fächerförmig angeordnete Streifen oder Finger oder fingerförmige Anformungen aufweisen.

Das Einlegeteil ist mit dem Kunststoffwerkstoff vorzugsweise über eine Kopplungsschicht aus Kunststoff verbunden, wobei die Kopplungsschicht eine graduelle oder gleichmässige Angleichung des die Steifigkeit bestimmenden E-Moduls und/oder der Wärmedehnzahl zwischen dem Kunststoffwerkstoff und dem Einlegeteil herbeiführt.

Der Werkstoffverbund weist zwischen dem Kunststoffwerkstoff und dem Einlegeteil eine verbesserte Festigkeit und Dauerhaftigkeit auf und hält höhere Belastungen aus.

Unter Verbundabschnitt ist der in den Kunststoffwerkstoff des Kunststoffbauelementes integrierte oder zu integrierende Abschnitt des Einlegeteils oder der mit wenigstens einer Flächenseite mit dem Kunststoffwerkstoff verbundene oder zu verbindende Abschnitt des Einlegeteils zu verstehen.

Das Kunststoffbauelement, auch Kunststoffstruktur genannt, ist aus einem vorzugsweise verstärkten, insbesondere faserverstärkten Kunststoff (FVK) gefertigt. Als Verstärkungsfasern können insbesondere anorganische Fasern, wie Glasfasern, Kohlenstoff- oder Graphitfasern, Metallfasern, keramische Fasern, oder Fasern aus Cellulosederivaten oder aus thermoplastischen Kunststoffen, wie z.B. Polyvinylchloride, Polyacrylonitrile, Polyacryle, Polyolefine, z.B. Polypropylen, Polyester, Polyamide oder Kunststofffasern bekannt unter Kevlar® bzw. Aramid, etc., oder Naturfasern, wie faserartige Silikatminerale, Jute, Sisal, Hanf, Baumwolle, Ramiefasern, verwendet werden. Die Kunststoffe können auch mit Geweben, Gewirken, Matten, Rovings oder Vliesen aus genannten Materialien verstärkte Kunststoffe sein. Als Verstärkungsmaterial können auch Schichten, Stäbe, Platten oder Folien aus geeigneten Materialien, beispielsweise aus oben genannten Materialien, in den Kunststoff eingelegt sein. Vorzugsweise sind die Kunststoffbauelemente CFK, GFK oder aramidfaserverstärkte Kunststoffe.

Der Fasergehalt des Kunststoffbauelements liegt zweckmässig im Bereich von 20 - 80 Vol.-% (Volumen-Prozent), insbesondere von 30 - 70 Vol-% und bevorzugt im Bereich von 55 - 65 Vol.-%. Liegt der Fasergehalt um 60 Vol.%, so erhält man Faserverbund-Kunststoffe von besonders hoher Steifigkeit und Belastbarkeit.

Der Kunststoff kann im weiteren, beispielsweise neben Verstärkungsfasern, auch Füllstoffe enthalten, welche beispielsweise grob- oder feinkörnig, plättchenförmig, sein können. Füllstoffe, wie beispielsweise Kalziumkarbonat, Kaolin, Glas, Glimmer, Talk, Silikat, Wollastonit oder Aluminiumoxide, reduzieren den thermischen Ausdehnungskoeffizienten des Kunststoffes. Füllstoffe, wie Aluminiumoxide und Antimonoxid, können verwendet werden, um die Feuerfestigkeit des Kunststoffes zu erhöhen, was insbesondere im Karosseriebau von Bedeutung ist, und Füllstoffe wie Glimmer und Silikate können eingesetzt werden, um die chemische Widerstandsfähigkeit des Kunststoffes zu erhöhen. Elektrisch leitendes Füllmaterial, wie Metallpulver und Graphit oder Russ, wird verwendet, um statisches Aufladen des Kunststoffes zu vermeiden. Füllstoffe, wie beispielsweise Kalk, Kohlepartikel oder Titandioxid, können als Pigmente eingesetzt werden. Farbpigmente können zur Einfärbung der Kunststoffe zugesetzt werden.

Der matrix-bildende Kunststoff des Kunststoffwerkstoffes im Kunststoffbauelement kann ein thermoplastischer Kunststoff (Thermoplast) oder duroplastischer Kunststoff (Duroplast) sein. Als Thermoplaste werden insbesondere Polyolefine, Polyvinylchlorid, Polystyrole, Styrol-Copolymerisate, Polystyrolschaum, Polystyrol schlagfest, Styrol-Acrylnitril-Copolymersate, Acrylnitril-Butadien-Styrol-Terpolymerisate, Acrylester-Styrol-Acrylnitil-Terpolymere, Polymethylmethacrylate, Acrylglas, Polyvinylcarbazole, Polyamide oder Polycarbonate verwendet. Bevorzugt sind insbesondere Polyester, wie Polyethylenterephthalate (PET), oder Polyamide.

Als Duroplaste finden insbesondere Epoxidharze, Epoxidharze enthaltende oder daraus bestehende Kunststoffe, Phenol-Formaldehydharze, Harnstoff-Formaldehydharze, Melamin-Formaldehydharze, Melamin-Phenol-Formaldehydharze, ungesättigte Polyesterharze, Polyimide oder Polyurethane Anwendung. Bevorzugt sind Epoxidharze oder Vinylester.

Die Einlegeteile sind beispielsweise aus Metall und können aus Eisen- oder Nicht-Eisenmetallen, z.B. aus Eisen, verzinktem Eisen, Stahl, Messing, Aluminium und seinen Legierungen oder Magnesium und seinen Legierungen sein. Vorzugsweise werden Einlegeteile aus Aluminium oder seinen Legierungen, aus Stahl oder verzinktem Eisen verwendet.

Die Einlegeteile können auch Schichtverbunde aus mindestens zwei Schichten sein, wobei mindestens eine Schicht aus einem der oben genannten Metallen ist. Aus der Reihe der Schichtverbunde werden vorzugsweise Sandwichelemente mit Deckschichten aus einem Metall, vorzugsweise aus Aluminium oder seinen Legierungen, Stahl oder verzinktem Eisen, sowie einem Kern aus Kunststoff, beispielsweise ein Kern aus einem Elastomer oder vorzugsweise aus einem Thermoplast oder Duroplast verwendet. Solche Verbundmaterialien werden beispielsweise unter den Markennamen Carbond® und Hylite® vertrieben.

Die Grösse bzw. die Längenausdehnung solcher Einlegeteile kann beispielsweise im Bereich von 1 - 20 cm liegen, wobei insbesondere bandförmige Einlegeteile entlang der Seiten von Kunststoffbauelementen auch von 20 cm bis zu Längen im Meterbereich reichen können.

Grundsätzlich gibt es insbesondere bezüglich der Längenausdehnung der Einlegeteile weder eine obere noch eine unter Begrenzung.

Die Wanddicke, insbesondere der Metalleinlegeteile bzw. der Aluminiumeinlegeteile, beträgt zweckmässig 1 - 10 mm, bevorzugt 2 - 7 mm und vorteilhaft 3 - 5 mm. Wanddicken ab rund 7 mm sind bei besonders grossen Belastungen vorgesehen. Die Einlegeteile werden zweckmässig rund 5 - 60 mm, bevorzugt 5 - 20 mm und vorteilhaft 10 - 15 mm tief in das Kunststoffteil eingebettet.

Die Kopplungsschicht besteht aus einem verstärkten Kunststoff, zweckmässig aus einem faserverstärkten Kunststoff enthaltend eine oder mehrere der vorgenannten Faserarten, wobei aus Kostengründen insbesondere glasfaserverstärkte Kunststoffe, bevorzugt E-Glasfasern ("low alkali" bzw. "electrical-grade") verwendet werden. Bevorzugt sind jedoch auch Kohlenstoff- oder Aramidfasern, insbesondere HT-Kohlenstofffasern ("High Tenacity"), oder eine Kombination der genannten Fasern. Der Fasergehalt der Kopplungsschicht liegt zweckmässig im Bereich von 20 - 70 Vol.-%, insbesondere von 35 - 60 Vol-% und bevorzugt im Bereich von 45 - 55 Vol.-%.

Die Kopplungsschicht kann eine Kunststoffmatrix aus einem Thermoplast oder einem Duroplast nach einer der vorgenannten Kunststoffarten enthalten. Die Matrixmaterialien der Kopplungsschicht und des Kunststoffwerkstoffes des Kunststoffbauelementes müssen nicht zwingend dieselben sein. Die Kopplungsschicht kann beispielsweise aus einem verstärkten Duroplast sein, während der Kunststoffwerkstoff des Kunststoffbauelementes aus einem verstärkten Thermoplast ist oder umgekehrt. Vorzugsweise enthalten die Kopplungsschicht und der Kunststoffwerkstoff dieselbe Kunststoffmatrix.

Die Oberflächen der Einlegeteile aus Metall, auch Metallverbinder genannt, bzw. die Metalloberflächen der Schichtverbunde, insbesondere Oberflächen aus Aluminium oder seinen Legierungen, werden zur Verbesserung des Haftvermögens der Kopplungsschicht an den entsprechenden Flächen zweckmässig einer Behandlung unterzogen.

Die Oberfläche wird beispielsweise mittels Chromat-Phosphat-Verfahren, Chromat-Verfahren (z. B. Gelb-, Grün- oder Transparentchromatisierung), Chromat-Protein-Verfahren oder Phosphatier-Verfahren mit einem chemisch erzeugten Überzug versehen. Weiters kann die Oberfläche auch anodisch oder chemisch oxidiert werden, um das Haftvermögen nachfolgender Schichten zu verbessern. Ist der Metallverbinder aus Stahl, kann das Entfetten und/oder das Aufrauhen der Metalloberfläche, beispielsweise durch Anschmiergeln oder Feststoff-Bestrahlen, unter Umständen als Oberflächenbehandlung genügen. Auch die Oberflächen von Nicht-Aluminiummetallen können mit einem chemisch erzeugten Überzug versehen werden, welcher beispielsweise nach einem der oben genannten geeigneten Verfahren erzeugt wird. Im weiteren können die Metalloberflächen auch mit einem Primer bzw. einem Haftvermittler, wie Silanen oder verdünnten Klebern, versehen werden.

Die als Verbindungsschnittstellen funktionierenden und aus dem Kunststoffbauelement herausragenden Flächenbereiche des Einlegeteils verfügen unter Berücksichtigung der verwendeten Befestigungsmittel bevorzugt bereits über die optimale Gestalt. Die Oberflächen sind vorteilhaft entsprechend den zu erwartenden elektrochemischen (Korrosion) oder chemischen Einflüssen entsprechend vorbehandelt.

Die Kopplungsschicht dient als Gradientschicht zwischen dem Einlegeteil und dem Kunststoffwerkstoff des Kunststoffbauelementes. Nachfolgend wird der Einfachheit halber nur noch von Kunststoffwerkstoff geschrieben, wobei darunter der Hauptbestandteil eines erfindungsgemässen Kunststoffbauelementes zu verstehen ist.

Unter Gradientschicht ist im vorliegenden Text folgendes zu verstehen: Werden zwei unterschiedliche Werkstoffe miteinander verbunden, so ändern sich in der Regel an deren Verbindungsflächen eine oder mehrere physikalische Grössen wie Dichte, Elastizität oder Wärmeausdehnung sprunghaft, was zu den bekannten Nachteilen wie Rissbildung, Ablösen der Verbindungsstellen, etc. führt. Dies kann vermieden werden, indem eine Gradientschicht in der Form einer Zwischenschicht, einer sogenannten Kopplungsschicht, eingeführt wird, welche sich dadurch auszeichnet, dass die betreffenden physikalischen Grössen zwischen den zu verbindenden Werkstoffen wie beispielsweise Kunststoff und Metall gleichmässig oder graduell bzw. abgestuft ändern und auf diese Weise eine Angleichung an die physikalischen Grössen der angrenzenden Werkstoffe stattfindet. Damit werden markante, sprunghafte Änderungen dieser physikalischen Grössen an den Verbindungsflächen abgebaut oder reduziert.

In vorliegender Erfindung erfüllt die Kopplungsschicht unter anderem zwei Aufgaben:

     1. Sie dient als Gradientschicht in Bezug auf die unterschiedlichen Elastizitäten zwischen dem Kunststoffwerkstoff und dem Einlegeteil.

     2. Sie dient als Gradientschicht in Bezug auf die unterschiedliche Wärmedehnung zwischen dem Kunststoffwerkstoff und dem Einlegeteil.

Die Kopplungsschicht kann zur Erfüllung lediglich einer oder beider der oben genannten Aufgaben eingesetzt werden. Vorzugsweise dient sie jedoch als Gradientschicht sowohl in Bezug auf die Elastizität als auch in Bezug auf die Wärmedehnung, wobei die Kopplungsschicht vorzugsweise primär zur Angleichung der Wärmedehnzahlen dient, da letztere Kenngrösse unter Umständen den bedeutenderen Einfluss auf die Festigkeit und Qualität des Werkstoffverbundes bzw. Kunststoff-Metall-Verbundes ausübt als die unterschiedlichen E-Module.

Im weiteren dient die Kopplungsschicht fallweise auch zur Verhinderung von Kontaktkorrosion zwischen den Metall-Einlegeteilen, insbesondere jenen aus Aluminium, aber auch jenen aus Stahl oder Eisenmetallen, und den Kohlenstofffasern des Kunststoffbauteils. Die Kopplungsschicht enthält hier, insbesondere an den Kontaktstellen zum Metallverbinder, vorzugsweise Glasfasern als Verstärkungsfasern.

Das Einlegeteil kann in einem separaten Fertigungsschritt mit der Kunststoff-Kopplungsschicht beschichtet werden.

Die Gradientwirkung in der Kopplungsschicht bezüglich der Wärmedehnzahl und des E-Moduls wird unter anderem durch die Wahl des Faservolumengehaltes, der Faserart und insbesondere durch das gezielte Ausrichten der Fasern oder Faserlagen im Schichtverbund, erreicht.

Eine Erhöhung des Faservolumengehaltes führt in der Regel zu einer Erhöhung der Steifigkeit bzw. zu einer abnehmenden Elastizität des Kunststoffes. Weiters bewirkt die Erhöhung des Faservolumengehaltes in der Regel eine Abnahme der Wärmedehnzahl.

Bei der Verwendung von CFK-Bauelementen, d.h. Kunststoffbauelemente mit einem kohlefasemverstärkten Kunststoffwerkstoff, mit einem Fasergehalt von zweckmässig 40-70 Vol-% und Metallverbindern aus Aluminium oder Magnesium oder aus einer Legierung, wenigstens eines dieser Metalle enthaltend, kann der Fasergehalt der Kopplungsschicht zweckmässig rund 5-20 Vol-% und insbesondere 5-15 Vol-% tiefer liegen als im CFK-Bauelement.

Faserarten wie Kohlenstofffasern weisen zudem einen etwa 5- bis 6mal so hohen E-Modul auf wie Glasfasern. Zwischen Glasfasern und Kohlenstofffasern liegt hinsichtlich des E-Moduls die Aramidfaser. Weiters kann die Wärmedehnzahl in der Kopplungsschicht ebenfalls durch die Faserart mitbeeinflusst werden. Kohlenstofffasern weisen beispielsweise eine kleinere Wärmedehnzahl auf als Glasfasern.

In CFK-Bauelementen mit Metallverbindern aus Aluminium oder Magnesium oder aus einer Legierung, wenigstens eines dieser Metalle enthaltend, enthält die Kopplungsschicht, insbesondere an den Kontaktflächen zum Metallverbinder, beispielsweise Glasfasern, insbesondere E-Glasfasern.

Besonders geeignet als Fasern in der Kopplungsschicht sind sogenannte HT (High-Tenacity)-Kohlenstofffasern. Diese zeichnen sich durch eine vergleichsweise hohe Zugfestigkeit aus. HT-Kohlenstofffasern werden insbesondere eingesetzt, wenn die Kunststoffstruktur sogenannte HM (High-Modulus)-Kohlenstofffasern enthält, welche sich im Vergleich zu HT-Kohlenstofffasern durch einen höheren E-Modul und eine tiefere Zugfestigkeit auszeichnen, und der Metallverbinder aus Aluminium oder Magnesium oder aus einer Legierung, wenigstens eines dieser Metalle enthaltend, besteht.

In den nachfolgend beschriebenen Ausführungsvarianten besteht der Kunststoffwerkstoff aus einem faserverstärkten Kunststoff und das Einlegeteil bevorzugt aus einem der vorgenannten Metalle. Die Kopplungsschicht besteht aus einem faserverstärkten Kunststoff.

In einer ersten Ausführungsvariante ist die Kopplungsschicht ein nicht laminierter und im wesentlichen homogener Faserverbund mit zufälliger Faserausrichtung. Die physikalischen Grössen wie E-Modul und Wärmedehnzahl, auch Wärmedehnwert genannt, liegen in einem Wertebereich zwischen den E-Moduls und Wärmedehnwerten der an die Kopplungsschicht angrenzenden Werkstoffe aus Metall bzw. Kunststoff. Die Kopplungsschicht weist vorzugsweise Mittelwerte dieser Grössen auf. Dadurch werden die Grössenänderungen der E-Module und der Wärmedehnzahlen auf mindestens zwei Kontaktflächen verteilt und somit an den einzelnen Verbindungsflächen reduziert. Der E-Modul und Wärmedehnwert werden unter anderem durch die Wahl des Faservolumengehaltes und der Faserart bestimmt.

In einer weiteren Ausführungsvariante ist die Kopplungsschicht ein Faserverbund mit gradueller Faserverteilung, in welchem die Fasern jedoch zufällig und lokal im wesentlichen gleichmässig in der Matrix orientiert sind. Solche Kopplungsschichten wie auch die der obigen ersten Ausführungsvariante werden beispielsweise in einem Thermoplastspritzgussverfahren, Faserspritz-Verfahren, in einem Pressverfahren wie "Bulk-Transfer-Moulding-Compound"-Verfahren (BMC-Verfahren), "Dough-Transfer-Moulding-Compound"-Verfahren (DMC-Verfahren) oder "Sheet-Transfer-Moulding-Compound"-Verfahren (SMC-Verfahren), auf die vorgesehenen Verbindungsflächen des Einlegeteils aufgebracht. Ein besonders geeignetes Spritzgussverfahren ist das sogenannte "Reinforced Reaction Injection Moulding" (RRIM)-Verfahren (siehe: Kunststoffkompendium, Vogel Fachbuch, 1990, S. 211ff, 229ff). Die graduelle Zunahme bzw. Abnahme des E-Moduls und der Wärmedehnzahl innerhalb der Kopplungsschicht wird in diesem Beispiel vorteilhaft durch die Änderung des Faservolumengehaltes und der Faserart in der Kopplungsschicht erreicht.

In einer weiteren Ausführungsvariante ist die Kopplungsschicht selbst laminiert, das heisst sie ist aus Faserlagen aufgebaut und stellt einen Faserschichtverbund dar, wobei hierzu insbesondere Herstellungsverfahren wie "Resin-Transfer-Moulding" (RTM) oder wie SMC mit beispielsweise harzgetränkten Matten oder Geweben, d.h. mit sogenannten Prepregs, angewendet werden. Der Schichtaufbau kann auch durch teilweises oder vollständiges Handlaminieren erfolgen (siehe: Einführung in die Technologie der Faserverbundwerkstoffe, Michaeli/Wegener, Karl Hanser Verlag, S. 41 ff).

Die graduelle Änderung der Elastizität, Steifigkeit bzw. der Wärmedehnzahl wird hier nicht nur durch den Faservolumengehalt, die Faserart oder Faserlänge in den Lagen sondern ganz wesentlich durch die Orientierung der einzelnen Fasern in den Faserlagen in Bezug auf die Hauptbelastungsrichtung (Zug-, Druckspannung) am Metallverbinder erreicht. Dazu werden beispielsweise Faserlagen verwendet deren mechanische Werte, d.h. die Ausrichtung der Fasern, vorzugsweise in einer Richtung (parallel liegende Rovings), oder auch in zwei Richtungen (Gewebe, Gelege) oder in mehrere Richtungen (multiaxiale Gelege) betont sind. Die exakte Ausrichtung in Hauptrichtung der einwirkenden Kräfte entspricht einer Faserorientierung von 0°. Die exakte Ausrichtung der Fasern quer zur Hauptrichtung der einwirkenden Kräfte entspricht einer Faserorientierung von +/- 90°.

An vergleichsweise höher elastischen Metallverbindern (im Vergleich zum Kunststoffelement), beispielsweise Aluminium, Magnesium oder deren Legierungen, liegen vorzugsweise schubweichere Faserlagen an. D.h. die Ausrichtung der Fasern liegt zweckmässig im Bereich von -70° bis -30° bzw. +30° bis +70°, bevorzugt von -60° bis -30° bzw. +30° bis +60° und besonders bevorzugt von -50° bis -40° bzw. +40° bis +50°.

Die Fasern verlaufen insbesondere bei einem ausgerichteten Faserlagenaufbau vorzugsweise immer parallel zur Längsfläche des Einlegeteils. In den nachfolgenden Ausführungen gilt somit als vorausgesetzt, dass die ausgerichteten Fasern unter anderem im wesentlichen parallel zur Längsfläche der Einlegeteile liegen.

An vergleichsweise niedriger elastischen Metallverbindern, beispielsweise gewisse Stahlsorten, liegen zweckmässig die weniger schubweichen Faserlagen mit Faserorientierungen von beispielsweise -20° bis +20°, vorzugsweise -10° bis +10°, an.

Die Orientierung der Fasern bzw. Faserlagen in der Kopplungsschicht an der Kontaktfläche zum Kunststoffwerkstoff richtet sich zweckmässig nach der Orientierung der an der Kontaktfläche liegenden Fasern oder Faserlagen im Kunststoffwerkstoff. Die Abweichung zwischen diesen beiden Faserorientierungen an der Grenzfläche Kunststoffwerkstoff/-Kopplungsschicht ist zweckmässig kleiner als +/- 60° und bevorzugt kleiner als +/- 45°.

Die Faserzwischenlagen in der Kopplungsschicht weisen beispielsweise Faserorientierungen auf, welche zwischen den in den jeweils äussersten Faserlagen vorliegenden Werten der Faserorientierung liegen.

Es können auch Schichtsysteme aufgebaut werden, welche sich durch mehrmals wiederholende Abfolgen von Faserlagen mit unterschiedlichen Faserausrichtungen auszeichnen.

Im allgemeinen zeigt die Änderung des Faservolumengehaltes in der Kopplungsschicht einen weniger grossen Einfluss auf das Wärmedehnverhalten und die Elastizität als die gezielte Ausrichtung der Fasern, weswegen letztere Methode bevorzugt ist.

Ein Faserschichtsystem einer Kopplungsschicht ist beispielsweise wie folgt aufgebaut: [(0°/+45°/-45°) $_x$]$_{sym}$, wobei 0° der Richtung der auf das Einlegeteil einwirkenden Hauptkräfte entspricht, die in der Regel parallel zur Längsfläche des Einlegeteils verlaufen, und die in runde Klammern gefassten Winkelangaben einer dreiteiligen Faserlagenabfolge mit entsprechenden Orientierungen der Fasern entsprechen. "x" stellt eine natürliche Zahl (unter Ausschluss von 0) dar und steht für die Anzahl der unmittelbar aufeinanderfolgenden, dreiteiligen Faserlagenabfolgen in der Kopplungsschicht, wobei x = 1 genau einer solchen Faserlagenabfolge entspricht. Solche Abfolgen von Faserlagen werden, wie in der Laminationstechnik üblich, symmetrisch geschichtet. "sym" steht für einen spiegelsymmetrischen Aufbau der in eckige Klammern gesetzten, sich unter Umständen wiederholenden Faserlagenabfolgen, wobei die Symmetrieebene bei dünneren Kopplungsschichten vorzugsweise in der Mittelängsebene des Einlegeteil liegt und bei dickeren Kopplungsschichten vorzugsweise durch eine zur Längsfläche bzw. zur Mittelängsebene des Einlegeteils parallel in der jeweiligen Kopplungsschicht liegenden Fläche gebildet wird. Dabei ist zu beachten, dass bei den vergleichsweise elastischeren Metallverbindern aus Aluminium- oder Magnesiumwerkstoffen immer die schubweicheren Faserlagen am Metallverbinder anliegen.

Die Faserausrichtung in den Faserlagen liegt hier zweckmässig in einem Wertebereich von [(-10° bis +10°/+30 bis +60°/-30° bis -60°) $_x$ ]$_{sym}$. Bevorzugt ist eine Abfolge von 2 bis 4 Faserlagen und insbesondere 3 Faserlagen. Möglich sind aber auch Lagenabfolgen mit bedeutend mehr oder weniger als drei Faserlagen. Die Anzahl x der Faserlagenabfolgen ist bevorzugt 1, sie kann jedoch beinahe beliebig gross sein, zweckmässig ist sie jedoch kleiner 7 und idealerweise kleiner 3.

Möglich sind auch unmittelbare Abfolgen von mehreren Faserschichtsystemen der vorgenannten Art, wobei sich die einzelnen Schichtsysteme bevorzugt durch unterschiedliche Faser- und/oder Kunststoffmaterialien aber auch durch unterschiedliche Ausrichtungen der Faserlagen in den betreffenden Faserlagenabfolgen unterscheiden können:

$$[(0°/+45°/-45°)_x]_{sym} \; // \; [(0°/+60°/-60°)_x]_{sym}$$

Die Faserschichtsysteme werden in der Schreibweise durch "//" voneinander abgegrenzt. Die Spiegelsymmetrieebenen der einzelnen Faserschichtsysteme liegen in diesem Fall jeweils in der Kopplungsschicht und verlaufen vorzugsweise parallel zu den Längsflächen der Einlegeteile. Im obigen Beispiel enthält das eine Faserschichtsystem Glasfasern und das andere HT-Kohlenstofffasem, wobei bei vergleichsweise elastischen Metallverbindern aus Aluminium oder Magnesium die Glasfaserlagen bevorzugt am Metallverbinder anliegen.

Die Dicke der Kopplungsschicht beträgt zweckmässig 0,4 - 4 mm, bevorzugt 0,5 - 3 mm, vorteilhaft 0,8 - 2,5 mm. Insbesondere an den Spitzen und den Längsflächenenden der Einlegeteile kann die Kopplungsschicht in Längsflächen-paralleler Richtung ein Mehrfaches der vorgenannten Schichtdicken betragen. An diesen Stellen gilt es, die besonders hohen Spitzen des Steifigkeitssprunges abzubauen und das Flächenträgheitsmoment in die Kopplungsschicht auslaufen zu lassen, um die Ermüdungsfestigkeit zu erhöhen.

Weiters ist zu beachten, dass die Klebstoffschicht bzw. die Matrixschicht der Kopplungsschicht zwischen dem Metallverbinder und den ersten Fasern bzw. Faserlagen nicht allzu dick ist, da beim Aushärten der Kopplungsschicht der Klebstoff schrumpft und die Verbindungsfläche tendenziell schwächt. Die genannte Klebstoffschichtdicke ist zweckmässig kleiner als 0,6 mm, vorzugsweise 0,1 - 0,5 mm, idealerweise rund 0,3 mm.

Die Kopplungsschicht kann im weiteren auch Füllstoffe der oben beschriebenen Art enthalten. So kann die thermische Ausdehnung durch Beigabe von Zusätzen mit geringer Wärmeausdehnung wie z.B. Quarzmehl oder Metallpulver beeinflusst werden. Die mechanische Festigkeit kann beispielsweise durch Zugabe von Sand, Metallspänen, Textilflocken etc. beeinflusst werden.

Der Kunststoffwerkstoff des Kunststoffbauelementes kann in einer ersten Ausführungsvariante ein Faserverbund mit beispielsweise Endlos- oder Langfasern vorzugsweise CF (Kohlenstofffasern), insbesondere High-Modulus-CF sein, in welchem die Fasern zufällig und im wesentlichen gleichmässig in der Matrix orientiert sind. Die Kunststoffbauelemente werden beispielsweise in einem Thermoplastspritzgussverfahren, in einem "Bulk-Transfer-Moulding-Compound"-Verfahren (BMC-Verfahren) oder einem "Dough-Transfer-Moulding-Compound"-Verfahren (DMC-Verfahren), hergestellt, wobei bevorzugt ein BMC-Verfahren angewendet wird.

Eine bevorzugte zweite Ausführungsart sind Kunststoffwerkstoffe bestehend aus einem Faserschichtverbund, welcher beispielsweise Endlos- oder Langfasern vorzugsweise CF, insbesondere High-Modulus-CF in Form von textilen Flächengebilden enthält. Die Kunststoffbauelemente werden beispielsweise in einem RTM-Verfahren oder SMC-Verfahren mit bevorzugt harzgetränkten Matten, Geweben, d.h. mit sogenannten Prepregs, hergestellt. Der Schichtaufbau kann auch durch teilweises oder vollständiges Handlaminieren erfolgen, wobei insbesondere die Handlamination ein sehr aufwendiges, teures und wenig bevorzugtes Verfahren ist.

Die Guss- bzw. Presswerkzeuge sind derart ausgestaltet, dass sie Einlegeteile aufnehmen können und diese während dem Giess- bzw. Pressvorgang in einem definierten Bereich fest mit dem Kunststoffwerkstoff verbunden werden.

Der vorstehende und nicht in den Kunststoffwerkstoff zu integrierende Abschnitt des bereits mit der Kopplungsschicht versehenen Einlegeteils wird beispielsweise vorgängig an gewünschter Stelle formschlüssig in eine Kavität im Werkzeug bzw. in der Gussform eingeführt, so dass die Kunststoffmasse während des Guss- oder Pressvorganges nicht in die Kavität eindringen kann und dieser Abschnitt des Einlegeteils frei bleibt.

Die Zugfestigkeit an den Verbindungsflächen zwischen Kunststoffwerkstoff und Einlegeteil im Kunststoffbauteil kann dank der beschriebenen Kopplungsschicht beispielsweise derjenigen von Aluminium entsprechen.

Bei glasfaserverstärkten Kunststoffbauelementen kann je nach Laminierung des Kunststoffwerkstoffes auf eine Kopplungsschicht verzichtet werden. Dies setzt jedoch voraus, dass die E-Module und die Wärmedehnzahlen im Werkstoffübergang keine markanten, sprunghaften Änderungen erfahren. In dieser Ausführungsvariante werden die Unterschiede in der Steifigkeit der beiden Werkstoffe insbesondere durch die Formgebung des Metallverbinders, wie nachfolgend beschrieben, reduziert.

Die Abminderung des Steifigkeitssprunges im Metall-Kunststoff-Verbund kann auch durch die Reduktion des Flächenträgheitsmomentes des Einlegeteils, insbesondere des Flächenträgheitsmomentes des Verbundabschnittes, verbessert werden. Dies betrifft insbesondere Einlegeteile aus Stahl oder dickwandige Einlegeteile beispielsweise aus Aluminium oder Magnesium, welche eine höhere Steifigkeit aufweisen als das Kunststoffbauteil.

Durch die Ausgestaltung der Form des Einlegeteils soll sein Flächenträgheitsmoment tief gehalten werden. Der Verbundabschnitt des Einlegeteils wird beispielsweise fingerförmig ausgestaltet. Eine vorteilhafte Ausführungsform ist die kammartige Ausbildung der Finger, wobei diese beispielsweise in der Form von Streifen parallel zueinander angeordnet und gleichmässig breit ausgebildet sind oder sich gegen deren freien Ende hin verjüngen. Die Fingerlänge beträgt beispielsweise 5 - 50 mm, vorzugsweise 7 - 20 mm, vorteilhaft 10 - 15 mm, und die Fingerdicke beträgt beispielsweise 1 - 10 mm, vorzugsweise 3 - 5 mm. Die Finger bzw. Streifen des Verbundabschnittes können als Fransen durch Einschneiden des Einlegeteiles gestaltet sein, so dass keine Zwischenräume bzw. Abstände zwischen den einzelnen Streifen entstehen oder es können Abstände bzw. Ausnehmungen zwischen den Fingern bzw. Streifen ausgebildet sein, welche beispielsweise der Breite der Finger oder Streifen entsprechen. Eine weitere bevorzugte Ausführungsform liegt in einer fingerförmigen Fächerung der Streifen und deren Verjüngung gegen das freie Ende hin. Durch die fingerförmige Auffächerung des Einlegeteiles erhält man einen zusätzlichen Ankerungseffekt.

Der Verbundabschnitt kann auch gelocht sein, wobei der Lochanteil je nach gewünschter Steifigkeit variiert werden kann. Die Steifigkeit kann beispielsweise durch eine gitterförmig Ausbildung des Verbundabschnittes besonders stark reduziert werden. Die damit verbundene Oberflächenvergrösserung bewirkt zudem einen besseren Werkstoffverbund zwischen dem Verbundabschnitt und dem Kunststoffwerkstoff. Im weiteren kann die Steifigkeit des Einlegeteils auch durch die Verringerung der Wanddicke reduziert werden. Die oben genannten Formgestaltungen, welche sich durch eine Reduktion der Steifigkeit des Einlegeteils auszeichnen, sind auch geeignet, um thermo-mechanische Spannungen aufgrund unterschiedlicher Wärmedehnzahlen auszugleichen oder zu dämpfen.

Die exakte Formgestaltung zur Reduktion des Flächenträgheitsmomentes ist jedoch im wesentlichen von der Art der Belastung des Einlegeteiles abhängig, z.B. ob auf dieses hauptsächlich Zug-, Torsions- oder Scherkräfte wirken.

Die Einlegeteile weisen Ausnehmungen, z.B. in Form von Lochöffnungen, und durch die Ausnehmungen führende Verschlaufungen mit Verstärkungsfasern, Fasersträngen und/oder mit vorzugsweise textilen Flächengebilden auf. Die durch die Ausnehmungen verschlauften Verstärkungsfasern, Faserstränge oder textilen Flächengebilde sind in die Kunststoffmatrix des Kunststoffbauteils eingebettet und mit dieser innig verbunden. Die Schlaufen können beispielsweise einfache Schlaufen, wie Augen- oder Parallelschlaufen, sein.

Die textilen Flächengebilde können rechteckförmig sein und durch eine oder mehrere Schlitzöffnungen oder Rundlochöffnungen im Verbundabschnitt des Einlegeteils führen, wobei die Öffnungen vorzugsweise gerundete Kanten und Ecken aufweisen. Die textilen Flächengebilde können, insbesondere an ihren freien Enden, beliebige Gestalt aufweisen. Die textilen Flächengebilde können beispielsweise in kammartig angeordnete Streifen oder in Ausfransungen auslaufen, d.h. am Ende auslaufende Einzelfasern bzw. Faserstränge aufweisen. Die textilen Flächengebilde können insbesondere streifenförmig sein und durch Rundlochöffnungen im Verbundabschnitt des Einlegeteils führen. Die Anzahl der Ausnehmungen mit Schlaufenverbindungen in einem Einlegeteil ist beliebig wählbar.

Ein Einlegeteil kann ein oder mehrere nebeneinander oder hintereinander angeordnete, verschlaufte, textile Flächengebilde, insbesondere streifenförmige, textilen Flächengebilde enthalten. Insbesondere streifenförmige, textile Flächengebilde können weiters auch fächerartig um das Einlegeteil angeordnet sein, so dass parallel zur Fläche des Einlegeteils verlaufende Zugkräfte unterschiedlicher Richtungen verbessert in das Kunststoffbauteil eingeleitet werden. Das Einlegeteil, bzw. dessen Verbundabschnitt kann auch Anformungen mit lochförmigen Ausnehmungen zur Verschlaufung von Fasern, Fasersträngen oder textilen Flächengebilden aufweisen.

Die Kunststoffbauteile, enthaltend vorgenannten Einlegeteile mit verschlauften, textilen Flächengebilden, enthalten vorzugsweise Verstärkungsfasern in Form textiler Flächengebilde.

Die textilen Flächengebilde sind z.B. Vliese, "Non-wovens", nicht-maschenbildende Systeme, wie Gewebe, uni- oder bidirektionale Gelege, Geflechte oder Matten usw. oder z.B. maschenbildende Systeme, wie Gestricke oder Gewirke sowie gestickte Strukturen. Bevorzugt werden hauptsächlich textile Flächengebilde aus gerichteten Fasern und insbesondere textile Gewebe aus vorzugsweise Langfasern mit Faserlängen von z.B. 3-150 mm oder Endlosfasern verwendet. Die Fasern bestehen zweckmässig aus Glas oder Kohlenstoff und vorzugsweise aus biegsamen und elastischem Aramid (z.B. Kevlar® oder Twaron®).

Kunststoffbauelemente mit vorgenannten Einlegeteilen mit verschlauften textilen Flächengebilden werden vorzugsweise mittels eines "Resin-Transfer-Moulding"-(RTM)-Verfahrens hergestellt. Die Einlegeteile werden mit ihrem Verbundabschnitt und den durch diesen verschlauften, textilen Flächengebilden gemeinsam mit dem Faserrohling des Kunststoffbauteils in eine Formkavität gelegt. Die eingelegten Fasergebilde werden mit einer Kunststoffmatrix getränkt und nachfolgend zu einem Kunststoffbauteil ausgehärtet. Die verschlauften, textilen Flächengebilde werden dabei in die Kunststoff-Matrix eingebunden und mit dieser verklebt, wodurch ein äusserst inniger und zäher Werkstoffverbund entsteht. Weitere anwendbare Herstellungsverfahren sind beispielsweise das vorgenannte SMC- oder BMC-Verfahren.

Einlegeteile mit verschlauften Verstärkungsfasern, Fasersträngen und/oder textilen Flächengebilden können optional eine Kopplungsschicht eines vorbeschriebenen Aufbaus enthalten.

Scharfe Kanten und spitze Ecken an den Verbundabschnitten der Einlegeteile werden vorzugsweise vermieden. Die betreffenden Kanten und Ecken der Einlegeteile werden deshalb zweckmässig angefast, abgeschrägt und/oder abgerundet. Zur Erreichung einer optimalen Festigkeit und Krafteinleitung in die Kunststoffstruktur werden insbesondere dickwandige Einlegeteile, beispielsweise ab 5 mm, in einem Verhältnis x:y, welches vorzugsweise zwischen 1:40 und 1:5, vorteilhaft zwischen 1:30 und 1:10 liegt und idealerweise rund 1:20 beträgt, angefast. Das Verhältnis x:y stellt den Tangens des spitzen Winkels $\alpha$ dar, welcher durch eine Parallelstrecke zur Mittellängsachse z und der die beiden Endpunkte der Anfasung verbindenden Gerade eingeschlossen wird.

Die erfindungsgemässen Kunststoffbauelemente können über die Einlegeteile bzw. Metallverbinder mit beinahe beliebigen mechanischen Verbindungstechniken an eine angrenzende Metallstruktur, an Verbundteile oder andere Kunststoffbauelemente befestigt werden. Die Verbindungen können mittels Durchsetzfügeverfahren nach TOX, Böllhof oder Eckold, mittels Nietverfahren wie Stanznieten, Scherzugnieten oder konventionellen Nietverfahren, mittels Schrauben, oder mittels Schweissen, wie Metall-Inertgasschweissen (MIG-Schweissen), Wolfram-Inertgasschweissen (TIG-Schweissen), Punktschweissen, Reibschweissen, erfolgen. Vorzugsweise wird ein Schweissverfahren angewendet, bei welchem die Wärmeeinbringung in das Kunststoffbauelement möglichst gering gehalten werden kann wie dies beispielsweise beim Laserstrahlschweissen der Fall ist. Ist die angrenzende Struktur ein Verbundwerkstoff, so eignet sich beispielsweise auch das Impulsschweissverfahren, insbesondere das Ultrapuls-Schweissverfahren.

Das erfindungsgemässe Kunststoffbauelement mit Einlegeteil ist herstellbar dadurch, dass das Einlegeteil aus Metall an dem die Kopplungsschicht anzubringenden Flächenbereichen einer haftverbessernden Oberflächenbehandlung unterzogen wird und mit einer Kopplungsschicht aus faserverstärktem Kunststoff versehen wird und das Einlegeteil mit dem aus dem Kunststoffbauelement herauszuragenden Abschnitt formschlüssig in eine Kavität der Gussform oder des Presswerkzeuges eingeführt wird und das Kunststoffbauelement in einem Giess- oder Pressverfahren geformt und der mit der Kopplungsschicht versehene Verbundabschnitt des Einlegeteils in den Kunststoffwerkstoff einlaminiert wird und mit diesem eine formschlüssige Verbindung eingeht.

Vorliegende Erfindung weist den Vorteil auf, dass in einem kostengünstigen Herstellungsverfahren Kunststoffbauelemente aus einem verstärkten Kunststoffwerkstoff mit Einlageteilen als Verbindungsschnittstellen hergestellt werden können, welche sich durch eine sehr hohe Festigkeit und Belastbarkeit der Verbindungsstellen auszeichnen. Dadurch können flächige, band- oder blechförmige Einlageteile mit hoher Festigkeit in das Kunststoffbauelement eingebaut werden. Dies erlaubt dem Konstrukteur Elemente anderer Baugruppen an beliebigen Stellen am Einlegeteil des Kunststoffbauelements anzubringen, wobei die Befestigungsart ebenfalls frei gewählt werden kann. Im weiteren können dank der vorliegenden Erfindung Kunststoffbauelemente für Funktionen eingesetzt werden, bei welchen bis anhin das Bauteil an seinen Verbindungsschnittstellen den hohen Belastungen und Beanspruchungen nicht Stand hielt. Dank der Kopplungsschicht wird zudem die mögliche Gefahr beseitigt, dass vor allem Einlegeteile aus Aluminium durch einen elektrolytischen Kontakt mit Kohlenstofffasern zu korrodieren beginnen.

In den nachfolgenden drei Beispielen werden bevorzugte Ausführungsformen von erfindungsgemässen Kunststoffbauelementen aus faserverstärktem Kunststoffwerkstoff mit über eine Kopplungsschicht einlaminierten Einlegeteilen aus Metall (Metallverbinder) dargelegt. Dabei sind

α:    Wärmeausdehnungskoeffizient in der Einheit 1/K (K: Kelvin);

E:    E-Modul in Hauptzugrichtung in der Einheit GPa (GPa: Giga-Pascal).

**Beispiel 1**

Metallverbinder

Werkstoff:    Aluminiumblech AA6060 (AlMgSi0.5 gemäss DIN)

$\alpha = 23{,}4 \times 10^{-6}$
$E = 73$

Kopplungsschicht:

Werkstoff:    GFK-Laminat mit Epoxidharzmatrix und Glasfasern
Fasergehalt: ca. 50 Vol-%

Aufbau der Faserlagen und ihre Ausrichtung in der Kopplungsschicht:

$$[(0°/+45°/-45°)_x]_{sym},$$

wobei x = 1 ist
und die -45°-Lage am Metallverbinder zu liegen kommt.
$\alpha = 12{,}0 \times 10^{-6}$
$E = 30$

Kunststoffwerkstoff des Kunststoffbauelementes:

Werkstoff:    Unidirektionales CFK-Laminat mit Epoxidharzmatrix und HT (High Tenacity)-Kohlenstofffasern
Fasergehalt: ca. 60 Vol-%

$\alpha \rightarrow 0$
$E = 180$

**Beispiel 2**

Metallverbinder

Werkstoff:    Aluminiumblech AA6060 (AlMgSi0.5 gemäss DIN)

$\alpha = 23{,}4 \times 10^{-6}$
$E = 73$

Kopplungsschicht:

Werkstoff:    CFK-Laminat mit Epoxidharzmatrix und HT (High Tenacity)-Kohlenstofffasern
Fasergehalt: ca. 50 Vol-%

Aufbau der Faserlagen und ihre Ausrichtung in der Kopplungsschicht:

$$[(0°/+45°/-45°)_x]_{sym},$$

wobei x = 1 ist,
und die -45°-Lage am Metallverbinder zu liegen kommt.
$\alpha = 12{,}0 \times 10^{-6}$
$E = 125$

Kunststoffwerkstoff des Kunststoffbauelementes:

Werkstoff:    Unidirektionales CFK-Laminat mit Epoxidharzmatrix und HM (High Modulus) -Kohlenstofffasern
Fasergehalt: ca. 60 Vol-%

$\alpha \rightarrow 0$
$E = 180$

**Beispiel 3**

Metallverbinder

Werkstoff:    Stahlblech ST 14

$\alpha = 13{,}0 \times 10^{-6}$
$E = 206$

Kopplungsschicht:

Werkstoff:    CFK-Laminat mit Epoxidharzmatrix und HT (High-Tenacity)-Kohlenstofffasern
Fasergehalt: ca. 50 Vol-%

Aufbau der Faserlagen und ihre Ausrichtung in der Kopplungsschicht:

$$[(0°/+45°/-45°)_x]_{sym},$$

wobei x = 1 ist,
und die 0°-Lage am Metallverbinder zu liegen kommt.
$\alpha = 12,0 \times 10^{-6}$
E = 125

Kunststoffwerkstoff des Kunststoffbauelementes:

Werkstoff:    Unidirektionales CFK-Laminat mit Epoxidharzmatrix und HM (High-Modulus)-Kohlenstofffasern
Fasergehalt: ca. 60 Vol-%

$\alpha \rightarrow 0$
E = 180

In allen Beispielen weist der faserverstärkte Kunststoffwerkstoff eine gegen den Wert Null strebende Wärmedehnzahl $\alpha$ auf ($\alpha$ -> 0). Die durchschnittlichen Wärmedehnzahlen der Kopplungsschichten sind jeweils kleiner als jene der entsprechenden Metallverbinder und grösser als jene des entsprechenden Kunststoffwerkstoffes. In den Beispielen 1 und 2 liegen diese Werte ungefähr zwischendrin. Das in Beispiel 3 verwendete Stahlblech weist hingegen eine verhältnismässig tiefe Wärmedehnzahl auf, weswegen die Kopplungsschicht diesbezüglich mit einer gegenüber dem Stahlblech nur wenig geringeren Wärmedehnzahl einen kleineren Angleichungseffekt bewirkt.

Die E-Module der Kopplungsschichten aus den oben gezeigten Beispielen sind Mischwerte. Die Angleichung des E-Moduls ist im Vergleich zur Wärmedehnzahl von sekundärer Bedeutung, weswegen in den Beispielen 1 und 3 der Anpassung des E-Moduls weniger Bedeutung geschenkt wurde. Beispiel 2 zeigt eine Kopplungsschicht, welche sowohl in Bezug auf die Wärmedehnzahlen als auch in Bezug auf die E-Module einen graduellen Übergang zwischen Metallverbinder und Kunststoffwerkstoff herstellt.

Im folgenden wird die Erfindung beispielhaft anhand der beiliegenden Zeichnungen näher erläutert. Es zeigen:

Fig. 6a:    eine Seitenansicht eines weiteren Einlegeteils;

Fig. 6b:    einen Querschnitt durch ein Einlegeteil gemäss Fig. 6a;

Fig. 6c:    einen vergrösserten Querschnitt durch die Bohrung im Einlegeteil gemäss Fig. 6b;

Fig. 7:    eine Seitenansicht eines weiteren bandförmigen Einlegeteils;

Fig. 8:    eine Seitenansicht eines weiteren fingerförmigen Einlegeteils;

Fig. 9:    eine Seitenansicht eines bandförmigen Einlegeteils mit Längsschlitz und einem durch diesen verschlauften, textilen Flächengebilde;

Fig. 10a:    eine Seitenansicht eines bandförmigen Einlegeteils mit Rundlochöffnungen und durch diese verschlauften, textilen Flächengebilde;

Fig. 10b:    einen Querschnitt durch ein Einlegeteil gemäss Fig. 10a;

Fig. 11:    eine Seitenansicht eines fingerförmigen Einlegeteils mit Rundlochöffnungen und durch diese verschlauften, textile Flächengebilde.

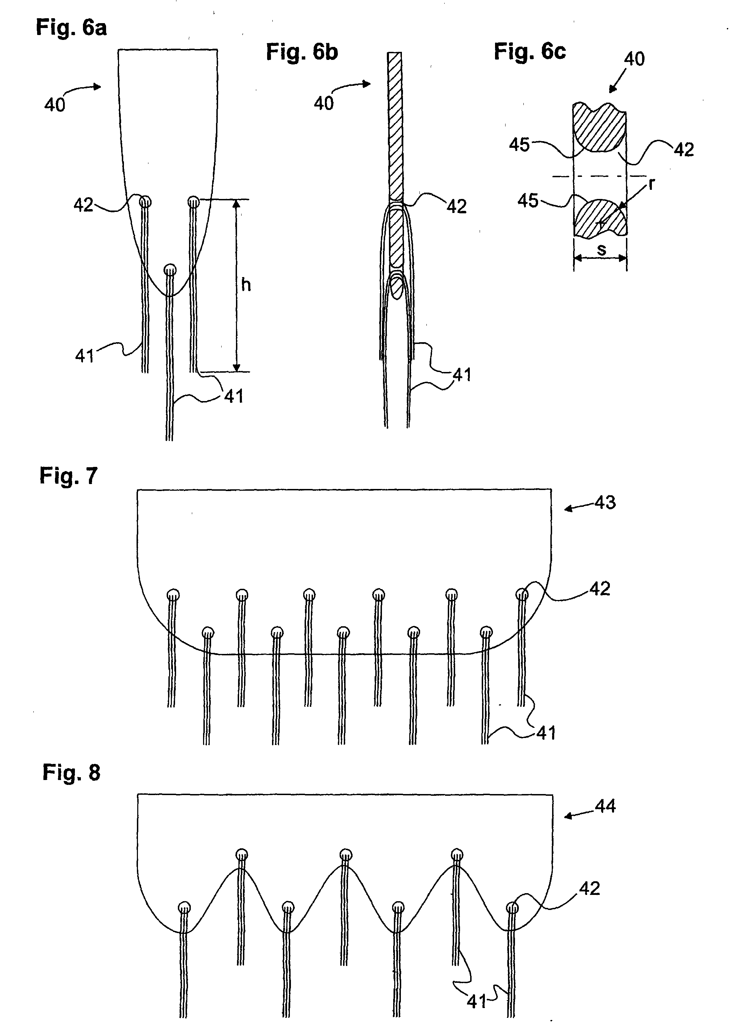

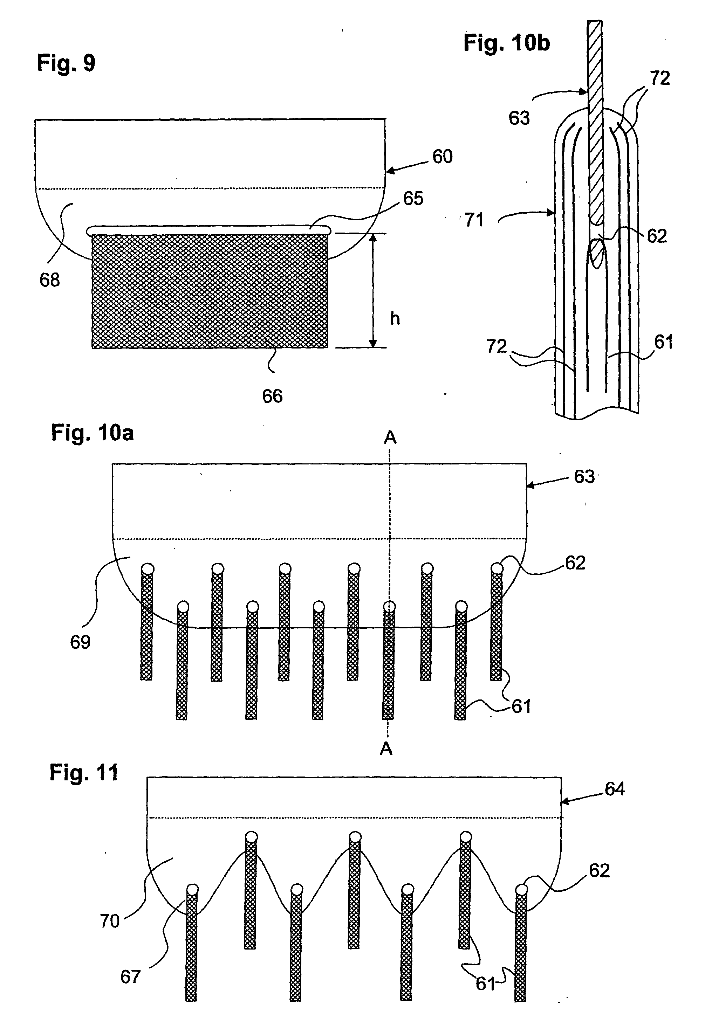

Fig. 6a und 6b zeigen eine weitere Ausgestaltung eines Einlegeteils 40. Dieses zeichnet sich dadurch aus, dass der Verbundabschnitt eine oder eine Mehrzahl von Bohrungen 42 bzw. Ausnehmungen aufweist, durch welche Verstärkungsfasern bzw. Faserstränge 41 geführt werden, wodurch beim Einlaminieren des Einlegeteiles 40 in den Kunststoffwerksstoff eine Verschlaufung des Einlegeteiles 40 in den Kunststoffwerkstoff erzielt wird. Zweckmässig werden hierzu trokkene Faserrovings bzw. Faserstränge 41 oder Garne, vorzugsweise 12K-Rovings verwendet. Die einzelnen Spinnfäden von rund 6 - 12 $\mu$m Durchmesser sind dabei zweckmässig zu Garnen von rund 1 - 3 mm Durchmesser verarbeitet. Die Fasern bestehen idealerweise aus Glas oder Kohlenstoff, vorzugsweise jedoch aus Aramid bzw. Kevlar®, welche besonders biegsam und elastisch sind. Die Fasern werden beim Einlaminieren des Einlegeteiles 40 insbesondere mit ihren freien, vom Einlegeteil 40 wegführenden Enden tief in die Matrix des Kunststoffwerkstoffes eingebunden und mit dieser verklebt, wodurch ein äusserst inniger und zäher Werkstoffverbund entsteht.

Die halbe Faserlänge h entspricht in etwa der Eindringtiefe des Verbundabschnittes. Sie kann beispielsweise rund 5 - 70 mm, zweckmässig rund 10 - 50 mm betragen. Die Faserstränge 41 wirken krafteinleitend und verankern das Einlegeteil 40 zusätzlich im Kunststoffwerkstoff. Die Rovings 41 können weiters auch fächerartig um das Einlegeteil 40 angeordnet sein, wodurch das Einlegeteil 40 verbessert allgemein Zug- und Druckkräfte mit in der Längsfläche des Einlegeteils 40 liegenden Kraftvektoren in das Kunststoffbauteil einleiten kann. Pro Bohrung 42 können auch mehrere Rovings 41 durchgezogen werden. Die Rovings können vor dem Einlaminieren durch Kleben oder ähnliche Befestigungstechniken zusätzlich am Einlegeteil 40 fixiert werden.

Die Bohrungen 42 bewirken im weiteren eine Reduktion des Flächenträgheitsmomentes des Einlegeteiles 40. Das beschriebene Einlegeteil 40 kann zusätzlich eine erfindungsgemässe Kopplungsschicht aufweisen.

Die Bohrwände 45 der Bohrungen 42 des Einlegeteil 40 sind zweckmässig gratfrei (siehe Fig. 6c), damit die Fasern eine möglichst grosse kraftaufnehmende Auflagefläche erhalten und verschleissbeständig sind. Dies gilt insbesondere für Einlegeteile 40 mit einer Wanddicke von grösser als 2-3 mm. Der Kurvenradius r der entgrateten Bohrwände 45 entspricht rund der Hälfte der Wanddicke s.

Weitere Ausführungsvarianten der unter Fig. 6a-c beschriebenen Einlegeteile mit Schlaufenverbindungen sind möglich, wobei Einlegeteile mit beliebigen Formen und Abmessungen, vorzugsweise jedoch insbesondere jene in dieser Anmeldung beschriebenen Formen, verwendet werden können. Bevorzugt werden insbesondere bandförmige Einlegeteile 43 (Fig. 7) und fächerartig oder parallel gefingerte Einlegeteile 44 (Fig. 8). Die Anzahl der Bohrungen 42 oder Schlaufenverbindungen bzw. Faserrovings 41 pro Flächeneinheit ist beliebig variabel, sie kann jedoch unter anderem von der Beanspruchung des Einlegeteils 40, 43, 44, den Abmessungen des Kunststoffbauteiles und der Wirtschaftlichkeit abhängig gemacht werden.

In weiterer Ausführung der Erfindung ist ein rechteckförmiges, textiles Flächengebilde 66 durch eine Schlitzöffnung 65 im Verbundabschnitt 68 eines bandförmigen Einlegeteils 60 verschlauft (Fig. 9). Die halbe Länge h des textilen Flächengebildes entspricht ungefähr der Eindringtiefe des Verbundabschnittes 68. Die Länge h kann beispielsweise rund 5 - 70 mm, zweckmässig rund 10 - 50 mm betragen. Das verschlaufte textile Flächengebilde 66 wirkt krafteinleitend und verankert das Einlegeteil 60 zusätzlich im Kunststoffwerkstoff.

Das in Figur 10a dargestellte Einlegeteil 63 weist einen Verbundabschnitt 69 mit einer Mehrzahl von in zwei Linien, jeweils versetzt zueinander angeordneten Bohrungen 62, bzw. Ausnehmungen, auf, durch welche streifenförmige, textile Flächengebilde 61 geführt bzw. verschlauft sind, und welche durch das Einlaminieren des Verbundabschnittes 69 in den Kunststoffwerkstoff als Zugschlaufen wirken. Die Bohrungen bzw. Ausnehmungen 62 bewirken im weiteren eine Reduktion des Flächenträgheitsmomentes des Einlegeteiles 63.

Figur 10b zeigt einen Querschnitt durch ein Einlegeteil 63 entlang der Linie A - A in Figur 10a, wobei das Einlegeteil 63, bzw. dessen Verbundabschnitt, in Figur 10b in ein Kunststoffbauteil 71 eingebettet ist und von diesem umhüllt wird. Das Kunststoffbauteil 71 enthält in eine Kunststoffmatrix eingebettete Faserlagen 72 in Form textiler Flächengebilde. Die am Einlegeteil 63 durch Ausnehmungen 62 verschlauften, streifenförmigen, textilen Flächengebilde 61 schliessen in parallelem Abstand an die Faserlagen 72 an. Die Ausnehmungen 62 sind abgerundet, so dass die streifenförmigen, textilen Flächengebilde 61 gleichmässig an der Wand der Ausnehmung aufliegen.

Figur 11 zeigt ein bandförmiges Einlegeteil 64, enthaltend einen Verbundabschnitt 70 mit fingerartigen Anformungen 67, wobei an den vorderen Endabschnitten der Anformungen 67 und in Randnähe, zwischen jeweils zwei Anformungen 67, Rundlochöffnungen 62 und durch diese verschlaufte, streifenförmige, textile Flächengebilde 61 angeordnet sind.

Die Wände der Ausnehmungen im Einlegeteil 60, 63, 64 sind zweckmässig gratfrei (siehe auch Fig. 6c), damit die Fasern eine möglichst grosse kraftaufnehmende Auflagefläche erhalten und keine punktuellen Kraftspitzen an Kanten erzeugt werden. Dies gilt insbesondere für Einlegeteile mit einer Wanddicke von grösser als 2-3 mm. Der Kurvenradius r der entgrateten Lochwände entspricht beispielsweise rund der Hälfte der Wanddicke s.

Ferner können die Verbundabschnitte der Einlegeteile gemäss den Figuren 7 bis 11 eine Kopplungsschicht aufweisen.

## Patentansprüche

1. Kunststoffbauelement aus einem Kunststoffwerkstoff und einem Einlegeteil (63) enthaltend einen mit dem Kunststoffbauelement verbundenen Verbundabschnitt (69),
**dadurch gekennzeichnet, dass**
das Einlegeteil (63) eine oder eine Mehrzahl von Ausnehmungen (62) enthält, durch welche Verstärkungsfasern, Faserstränge und/oder textile Flächengebilde (61) verschlauft sind, welche mit ihren freien Enden krafteinleitend in die Kunststoffmatrix des Kunststoffbauteils einlaminiert und mit dieser innig verbunden sind und das Einlegeteil (63) im Kunststoffwerkstoff verankern.

2. Kunststoffbauelement nach Anspruch 1, **dadurch gekennzeichnet, dass** der Verbundabschnitt des Einlegeteils kammartige, parallel liegende oder fächerförmig angeordnete Streifen oder Finger oder fingerförmige Anformungen aufweist.

3. Kunststoffbauelement nach Anspruch 1, **dadurch gekennzeichnet, dass** das Einlegeteil (63) mit dem Kunststoffwerkstoff über eine Kopplungsschicht aus Kunststoff verbunden ist und die Kopplungsschicht eine graduelle oder gleichmässige Angleichung des die Steifigkeit bestimmenden E-Moduls und/oder der Wärmedehnzahl zwischen dem Kunststoffwerkstoff und dem Einlegeteil herbeiführt.

**4.** Kunststoffbauelement nach Anspruch 3, **dadurch gekennzeichnet, dass** die Kopplungsschicht (7) einen verstärkten Kunststoff in einer Epoxidharzmatrix, insbesondere einen faserverstärkten Kunststoff, vorzugsweise einen GFK, insbesondere E-Glasfasern enthaltend, oder einen CFK, insbesondere HT-Kohlenstofffasern enthaltend, oder ein Gemisch von CFK und GFK, mit einem Fasergehalt von 30 - 70 Vol.-% und vorzugsweise von 45 - 60 Vol.-%, enthält.

**5.** Kunststoffbauelement nach einem der Ansprüche 1 bis 4, **dadurch gekennzeichnet, dass** der Kunststoffwerkstoff (6) einen verstärkten Kunststoff in einer Epoxidharzmatrix, insbesondere einen faserverstärkten Kunststoff, vorzugsweise einen GFK oder CFK, insbesondere mit HM-Kohlenstofffasern, oder ein Gemisch von GFK und CFK, mit einem Fasergehalt von 40 - 70 Vol.-% und vorzugsweise von 55 - 65 Vol.-%, enthält.

**6.** Kunststoffbauelement nach einem der Ansprüche 1 bis 5, **dadurch gekennzeichnet, dass** das Einlegeteil (63) ein Metall, insbesondere Aluminium, Magnesium oder eine wenigstens Aluminium oder Magnesium enthaltende Legierung oder Stahl oder verzinktes Eisen enthält.

**7.** Kunststoffbauelement nach einem der Ansprüche 3 bis 6, **dadurch gekennzeichnet, dass** das Einlegeteil (63) aus Aluminium, Magnesium oder aus einer wenigstens Aluminium oder Magnesium enthaltenden Legierung besteht, und der Kunststoffwerkstoff durch Fasern, insbesondere durch Kohlenstofffasern, verstärkt ist und einen Fasergehalt von 40 Vol.-% bis 70 Vol.-% aufweist, und die Kopplungsschicht durch Fasern verstärkt ist, zweckmässig durch Kohlenstofffasern, insbesondere HT-Kohlenstofffasern, oder Glasfasern, insbesondere E-Glasfasern, oder durch ein Gemisch von Kohlenstofffasern und Glasfasern, und der Fasergehalt in der Kopplungsschicht um durchschnittlich 5-15 Vol.-% tiefer liegt als im Kunststoffwerkstoff (6).

**8.** Kunststoffbauelement nach Anspruch 3 und 7, **dadurch gekennzeichnet, dass** der Faservolumengehalt der Kopplungsschicht ausgehend vom Kunststoffwerkstoff zum Einlegeteil (63) hin graduell oder gleichmässig abnimmt und/oder der Anteil der Glasfasern im Verhältnis zum Anteil der Kohlenstofffasern zum Einlegeteil hin zunimmt.

**9.** Kunststoffbauelement nach einem der Ansprüche 3 bis 8, **dadurch gekennzeichnet, dass** das Einlegeteil (63) aus Aluminium, Magnesium oder aus einer wenigstens Aluminium oder Magnesium enthaltenden Legierung besteht, und die Kopplungsschicht ein Faserschichtverbund ist und einen Lagenaufbau von Faserlagen aufweist, wobei die Fasern der einzelnen Lagen in eine, zwei oder mehrere, vorzugsweise jedoch in eine Richtung und vorzugsweise in Parallelrichtung zur Seitenfläche orientiert sind und die dem Einlegeteil (13) nächstliegenden Fasern oder Faserlagen vorzugsweise eine Ausrichtung von -30° bis -70° oder von +30° bis +70° aufweisen, wobei 0° der Richtung der auf das Einlegeteil einwirkenden Hauptkräfte entspricht, und die dem Kunststoffwerkstoff naheliegenden Fasern bzw. Faserlagen sich an der Orientierung der angrenzenden Fasern oder Faserlagen im Kunststoffwerkstoff ausrichten, wobei die Abweichung in der Faserorientierung zweckmässig kleiner als 60°, bevorzugt kleiner als 45°, ist.

**10.** Kunststoffbauelement nach Anspruch 3 und 9, **dadurch gekennzeichnet, dass** die Fasern im faserverstärkten Kunststoff der Kopplungsschicht als Faserlagen vorliegen, wobei mehrere Faserlagen ein Faserschichtsystem bilden, und die einzelnen Faserlagen oder die einzelnen aus Abfolgen von Faserlagen bestehenden Faserschichtsysteme unterschiedliche Faserarten enthalten, wobei die Faserarten vorzugsweise Kohlenstofffasern, insbesondere HT-Kohlenstofffasern, und Glasfasern sind, und am Verbundabschnitt wenigstens eine Faserlage aus Glasfasern anliegt.

**11.** Kunststoffbauelement nach einem der Ansprüche 3 bis 10, **dadurch gekennzeichnet, dass** das Einlegeteil wenigstens an seiner Oberfläche aus Aluminium oder seinen Legierungen ist, und an den die Kopplungsschicht aufnehmenden Stellen chemisch behandelt, vorzugsweise phosphatiert, chromatiert, oxidiert oder anodisch oxidiert ist.

**12.** Kunststoffbauelement nach einem der Ansprüche 3 bis 11, **dadurch gekennzeichnet, dass** die metallischen Oberflächen der Einlegeteile, an den die Kopplungsschicht aufnehmenden Stellen entfettet und/oder aufgerauht sind.

**13.** Kunststoffbauelement nach einem der Ansprüche 1 bis 12, **dadurch gekennzeichnet, dass** der Verbundabschnitt Oberflächenvergrösserungen, vorzugsweise Lochungen, Ausnehmungen oder gitterförmige Strukturen aufweist.

**14.** Kunststoffbauelement nach einem der Ansprüche 1 bis 13, **dadurch gekennzeichnet, dass** der Verbundabschnitt des Einlegeteils Ankerelemente, vorzugsweise hakenförmige, T-förmige oder trapezförmige Anformungen, aufweist oder selbst in der Form eines Ankerelementes ausgebildet ist, vorzugsweise durch Abwinkelungen am Verbundabschnitt, oder Rauhigkeitsmuster, vorzugsweise Riffelungen, enthält.

15. Kunststoffbauelement nach einem der Ansprüche 1 bis 14, **dadurch gekennzeichnet, dass** der Verbundabschnitt (69) des Einlegeteils (63) eine oder eine Mehrzahl von Ausnehmungen (62) enthält, durch welche Verstärkungsfasern, Faserstränge und/oder textile Flächengebilde (61) verschlauft sind.

16. Kunststoffbauelement nach einem der Ansprüche 1 bis 15, **dadurch gekennzeichnet, dass** die Endabschnitte der Einlegeteile in einem Verhältnis x:y von 1:30 bis 1:10, vorzugsweise von rund 1:20 angefast sind, wobei das Verhältnis x:y den Tangens des spitzen Winkels $\alpha$ darstellt, welcher durch eine Parallelstrecke zur Mittelängsachse z und der die beiden Endpunkte P, R der Anfasung verbindenden Gerade eingeschlossen wird.

17. Strassen- und Schienenfahrzeuge, Luftfahrzeuge, Maschinen und Bauten mit wenigstens einem Kunststoffbauelement nach Anspruch 1.

**Claims**

1. Plastic component made of a plastic material and an insert part (63) containing a bonding portion (69) joined to the plastic component, **characterised in that** the insert part (63) is provided with one or more recesses (62) through which reinforcing fibres, fibre strands and/or textile fabrics (61) are looped, these being laminated into the plastic matrix of the plastic component in a force-transmitting manner by means of their free ends and being intimately connected thereto and the insert part (63) being anchored in the plastic material.

2. Plastic component according to claim 1, **characterised in that** the bonding portion of the insert part comprises comb-like, parallel or fan-like strips or fingers or finger-like moulded-on portions.

3. Plastic component according to claim 1, **characterised in that** the insert part (63) is joined to the plastic material via a coupling layer made of plastic and the coupling layer brings about gradual or uniform equalisation of the modulus of elasticity determining rigidity and/or of the coefficient of thermal expansion between the plastic material and the insert part.

4. Plastic component according to claim 3, **characterised in that** the coupling layer (7) contains a reinforced plastic in an epoxy matrix, in particular a fibre-reinforced plastic, preferably a GRP, in particular containing E-glass fibres, or a CRP, in particular containing HT carbon fibres, or a mixture of CRP and GRP, with a fibre content of 30 - 70 % by volume and preferably 45 - 60 % by volume.

5. Plastic component according to one of claims 1 to 4, **characterised in that** the plastic material (6) contains a reinforced plastic in an epoxy matrix, in particular a fibre-reinforced plastic, preferably a GRP or CRP, in particular with HM carbon fibres, or a mixture of GRP and CRP, with a fibre content of 40 - 70 % by volume and preferably 55 - 65 % by volume.

6. Plastic component according to one of claims 1 to 5, **characterised in that** the insert part (63) contains a metal, in particular aluminium, magnesium or an alloy containing at least aluminium or magnesium or steel or galvanised iron.

7. Plastic component according to one of claims 3 to 6, **characterised in that** the insert part (63) consists of aluminium, magnesium or an alloy containing at least aluminium or magnesium, the plastic material is reinforced by fibres, in particular carbon fibres, and has a fibre content of 40 % by volume to 70 % by volume, and the coupling layer is reinforced by fibres, advantageously carbon fibres, in particular HT carbon fibres, or glass fibres, in particular, E-glass fibres, or by a mixture of carbon fibres and glass fibres and the fibre content of the coupling layer is 5-15 % by volume lower than that of the plastic material (6).

8. Plastic component according to claims 3 and 7, **characterised in that** the fibre volume content of the coupling layer decreases gradually or uniformly from the plastic material to the insert part (63) and/or the glass fibre content increases in relation to the carbon fibre content towards the insert part.

9. Plastic component according to one of claims 3 to 8, **characterised in that** the insert part (63) consists of aluminium, magnesium or an alloy containing at least aluminium or magnesium and the coupling layer is a layered fibre composite and has a layered structure of fibre layers, the fibres of the individual layers being oriented in one, two or more, but preferably one direction and preferably in a direction parallel to the side surface, the fibres or fibre layers closest to the insert part (13) preferably have an orientation of - 30° to - 70° or + 30° to + 70°, where 0° corresponds to the direction of the principal forces acting on the insert part, and the fibres or fibre layers close to the plastic material are aligned with the orientation of the adjacent fibres or fibre layers in the plastic material, the deviation in the fibre orientation advantageously being less than 60°, preferably less than 45°.

**10.** Plastic component according to claims 3 and 9, **characterised in that** the fibres in the fibre-reinforced plastic of the coupling layer are in the form of fibre layers, with several fibre layers forming a fibre layer system, the individual fibre layers or the individual fibre layer systems consisting of sequences of fibre layers contain different fibre types, the fibre types preferably being carbon fibres, in particular HT carbon fibres, and glass fibres, and at least one fibre layer made of glass fibres bears against the bonding portion.

**11.** Plastic component according to one of claims 3 to 10, **characterised in that** the insert part is made at least on its surface of aluminium or alloys thereof and is treated chemically, preferably phosphated, chromated, oxidised or anodised, at the points receiving the coupling layer.

**12.** Plastic component according to one of claims 3 to 11, **characterised in that** the metal surfaces of the insert parts are degreased and/or roughened at the points receiving the coupling layer.

**13.** Plastic component according to one of claims 1 to 12, **characterised in that** the bonding portion comprises increases in surface area, preferably perforations, recesses or grid-like structures.

**14.** Plastic component according to one of claims 1 to 13, **characterised in that** the bonding portion of the insert part comprises anchoring elements, preferably hook-shaped, T-shaped or trapezoidal moulded-on portions, or is itself designed as an anchoring element, preferably by means of bends in the bonding portion, or is provided with roughness patterns, preferably ribbing.

**15.** Plastic component according to one of claims 1 to 14, **characterised in that** the bonding portion (69) of the insert part (63) is provided with one or more recesses (62) through which reinforcing fibres, fibre strands and/or textile fabrics (61) are looped.

**16.** Plastic component according to one of claims 1 to 15, **characterised in that** the end portions of the insert parts are chamfered in a ratio x:y of 1:30 to 1:10, preferably approximately 1:20, where the ratio x:y represents the tangent of the acute angle $\alpha$ included by a line parallel to the centre longitudinal axis z and the straight line connecting the two end points P, R of the chamfer.

**17.** Road and rail vehicles, aircraft, machines and structures comprising at least one plastic component according to claim 1.

**Revendications**

**1.** Elément de construction en matière plastique à base d'un matériau plastique et d'une pièce d'insertion (63) contenant un tronçon composite (69) relié à l'élément de construction en matière plastique, **caractérisé en ce que** la pièce d'insertion (63) contient une ou une multiplicité d'évidements (62) par lesquels les fibres de renfort, les brins de fibres, et/ou les structures surfaciques textiles (61) sont fixées, lesquelles sont laminées avec leurs extrémités libres introductives de force dans la matrice plastique de l'élément de construction en matière plastique et sont intimement liées avec celle-ci et ancrent la pièce d'insertion (63) dans le matériau plastique.

**2.** Elément de construction en matière plastique selon la revendication 1, **caractérisé en ce que** le tronçon composite de la pièce d'insertion présente aussi des bandes ou des doigts ou des parties en forme de doigt disposés en forme de peigne, en parallèle ou en forme d'éventail.

**3.** Elément de construction en matière plastique selon la revendication 1, **caractérisé en ce que** la pièce d'insertion (63) est reliée au matériau plastique au moyen d'une couche de couplage en matière plastique, la couche de couplage provoquant un réajustement graduel ou régulier du module E déterminant la rigidité et/ou du coefficient de dilatation thermique entre le matériau plastique et la pièce d'insertion.

**4.** Elément de construction en matière plastique selon la revendication 3, **caractérisé en ce que** la couche de couplage (7) contient un plastique renforcé de fibres dans une matrice en résine époxy, en particulier une matière plastique renforcée de fibres, de préférence un plastique renforcé de fibres de verre, en particulier contenant des fibres de verre E ou un plastique renforcé de fibres de carbone, contenant en particulier des fibres de carbone HT ou un mélange de plastique renforcé de fibres de carbone et de plastique renforcé de fibres de verre, avec une teneur en fibres de 30 à 70 % en volume et de préférence de 45 à 60 % en volume.

**5.** Elément de construction en matière plastique selon l'une quelconque des revendications 1 à 4, **caractérisé en ce que** le matériau plastique (6) contient un plastique renforcé dans une matrice en résine époxy, en particulier un plastique renforcé de fibres, de préférence un plastique renforcé de fibres de verre ou un plastique renforcé de fibres de carbone, en particulier avec des fibres de carbone HM, ou un mélange de plastique renforcé de fibres de verre et de plastique renforcé de fibres de carbone, avec une teneur en fibres de 40 à 70% en volume et de préférence de 55 à 65 % en volume.

6. Elément de construction en matière plastique selon l'une quelconque des revendications 1 à 5, **caractérisé en ce que** la pièce d'insertion (63) contient un métal, en particulier de l'aluminium, du magnésium ou un alliage contenant au moins de l'aluminium ou du magnésium ou de l'acier ou du fer galvanisé.

7. Elément de construction en matière plastique selon l'une quelconque des revendications 3 à 6, **caractérisé en ce que** la pièce d'insertion (63) est à base d'aluminium, de magnésium ou d'un alliage contenant au moins de l'aluminium ou du magnésium, et le matériau plastique est renforcé par des fibres, en particulier par des fibres de carbone, et présente une teneur en fibres de 40 % en volume jusqu'à 70 % en volume, et la couche de couplage est renforcée par des fibres, utilement des fibres de carbone, en particulier des fibres de carbone HT ou des fibres de verre, en particulier des fibres de verre E, ou par un mélange de fibres de carbone et de fibres de verre et la teneur en fibres dans la couche de couplage est en moyenne inférieure de 5 à 15 % en volume par rapport au matériau plastique (6).

8. Elément de construction en matière plastique selon les revendications 3 et 7, **caractérisé en ce que** la teneur en volume de fibres de la couche de couplage diminue graduellement ou régulièrement depuis le matériau plastique vers la pièce d'insertion (63) et/ou la fraction des fibres de verre augmente en direction de la pièce d'insertion proportionnellement à la fraction des fibres de carbone.

9. Elément de construction en matière plastique selon l'une quelconque des revendications 3 à 8, **caractérisé en ce que** la pièce d'insertion (63) est à base d'aluminium, de magnésium ou d'un alliage contenant au moins de l'aluminium ou du magnésium, et la couche de couplage est un composite de couches de fibres et présente une structure de couches de fibres, les fibres des différentes couches étant orientées dans une ou plusieurs directions, mais de préférence dans une direction et de préférence dans la direction parallèle à la face latérale et les fibres ou couches de fibres les plus proches de la pièce d'insertion (63) présentant de préférence une orientation de -30° jusqu'à -70° ou de +30° jusqu'à +70°, 0° correspondant à la direction des forces principales agissant sur la pièce d'insertion, et les fibres ou couches de fibres proches du matériau plastique s'orientant selon l'orientation des fibres ou couches de fibres limitrophes dans le matériau plastique, l'écart dans l'orientation des fibres étant utilement inférieur à 60°, de préférence inférieur à 45°.

10. Elément de construction en matière plastique selon les revendications 3 et 9, **caractérisé en ce que** les fibres sont présentes dans le plastique renforcé de fibres de la couche de couplage sous la forme de couches de fibres, de sorte que plusieurs couches de fibres forment un système de couche de fibres et les différentes couches de fibres ou différents systèmes de couche de fibres composés de successions de couches de fibres contiennent différents types de fibres, les types de fibres étant de préférence des fibres de carbone, en particulier des fibres de carbone HT, et des fibres de verre, et au moins une couche de fibres à base de fibres de verre s'appuyant sur le tronçon composite.

11. Elément de construction en matière plastique selon l'une quelconque des revendications 3 à 10, **caractérisé en ce que** la pièce d'insertion est à base d'aluminium ou de ses alliages au moins sur sa surface et est traitée chimiquement, de préférence phosphatée, chromatée, oxydée ou oxydée de façon anodique aux emplacements recevant la couche de couplage.

12. Elément de construction en matière plastique selon l'une quelconque des revendications 3 à 11, **caractérisé en ce que** les surfaces métalliques des pièces d'insertion sont dégraissées et/ou rendues rugueuses sur les emplacements qui reçoivent la couche de couplage.

13. Elément de construction en matière plastique selon l'une quelconque des revendications 1 à 12, **caractérisé en ce que** le tronçon composite présente des agrandissements de surface, de préférence des perforations, des évidements ou des structures en forme de grille.

14. Elément de construction en matière plastique selon l'une quelconque des revendications 1 à 13, **caractérisé en ce que** le tronçon composite de la pièce d'insertion présente des éléments d'ancrage, de préférence des parties formées en forme de crochet, de T ou de trapèze ou est conçue elle-même sous la forme d'un élément d'ancrage, de préférence par des parties anguleuses sur le tronçon composite ou présente des modèles de rugosité, de préférence des cannelures.

15. Elément de construction en matière plastique selon l'une quelconque des revendications 1 à 14, **caractérisé en ce que** le tronçon composite (69) de la pièce d'insertion (63) contient un ou un grand nombre d'évidements (62), évidements par lesquels des fibres de renfort, des brins de fibres et/ou des structures surfaciques (61) textiles sont passés en boucles.

**16.** Elément de construction en matière en plastique selon l'une quelconque des revendications 1 à 15, **caractérisé en ce que** les tronçons d'extrémité des pièces d'insertion sont chanfreinés dans un rapport x : y de 1 : 30 jusqu'à 1 : 10, de préférence d'environ 1 : 20, le rapport x : y représentant la tangente de l'angle aigu $\alpha$, qui est formé par un tronçon parallèle à l'axe longitudinal médian z et à la droite reliant les deux points d'extrémité P, R du chanfrein.

**17.** Véhicules routiers et véhicules sur rails, aéronefs, machines et constructions comprenant au moins un élément de construction en matière plastique selon la revendication 1.

**Fig. 6a**

40

42

41

41

h

**Fig. 6b**

40

42

41

**Fig. 6c**

40

45

42

45

r

s

**Fig. 7**

43

42

41

**Fig. 8**

44

42

41

**Fig. 9**

60

65

68

h

66

**Fig. 10b**

63

72

71

62

72

61

**Fig. 10a**

A

63

62

69

61

A

**Fig. 11**

64

62

70

67

61